# EUROPÄISCHE PATENTANMELDUNG

(11) **EP 3 597 085 A1**
(43) Veröffentlichungstag der Anmeldung: **22.01.2020**
(21) Anmeldenummer: 19181103.3
(22) Anmeldetag: 19.06.2019
(51) Int. Cl.: A47J 31/60

(54) **VERFAHREN ZUM ÜBERWACHEN EINES FÜLLGRADS VON REINIGUNGSMITTEL FÜR EIN WASSERFÜHRENDES GERÄT UND VORRICHTUNG DAFÜR**

(30) Priorität: 19.07.2018 DE 102018117444
(71) Anmelder: Miele & Cie. KG, 33332 Gütersloh (DE)
(72) Erfinder: Linke, Patrick, 33611 Bielefeld (DE); Morbach, Andreas, 33334 Gütersloh (DE)

(57) **Zusammenfassung**

Die Erfindung betrifft ein Verfahren zum Überwachen eines Füllgrads von Reinigungsmittel (110) in einer Kartusche (115) für ein wasserführendes Gerät, bevorzugt Getränkezubereitungsgerät (100). Das Verfahren umfasst zumindest einen Schritt des Einlesens und einen Schritt des Ermittelns. Im Schritt des Einlesens wird ein Reinigungsmittelsignal eingelesen, das eine einem Reinigungsvorgang entsprechende Menge an aus der Kartusche (115) zu förderndem Reinigungsmittel (110) repräsentiert. Im Schritt des Ermittelns wird unter Verwendung des Reinigungsmittelsignals und eines Ursprungsfüllgrads von Reinigungsmittel (110) in der Kartusche (115) ein aktueller Füllgrad von Reinigungsmittel (110) in der Kartusche (115) ermittelt.

## Beschreibung

Die Erfindung betrifft ein Verfahren und eine Vorrichtung zum Überwachen eines Füllgrads von Reinigungsmittel in einer Kartusche für ein wasserführendes Gerät, bevorzugt ein Getränkezubereitungsgerät und ein wasserführendes Gerät und ein Getränkezubereitungsgerät

Um einen Füllstand eines Vorratsbehälters in einem Getränkezubereitungsgerät zu überwachen ist es möglich, in dem Vorratsbehälter einen Schwimmer zum Anzeigen des Füllstands anzuordnen.

Die DE 10 2014 103 811 A1 beschreibt einen solchen Vorratsbehälter mit Schwimmer für einen Getränkeautomaten.

Der Erfindung stellt sich die Aufgabe ein verbessertes Verfahren und eine verbesserte Vorrichtung zum Überwachen eines Füllgrads von Reinigungsmittel in einer Kartusche für ein wasserführendes Gerät und ein verbessertes wasserführendes Gerät zu schaffen.

Erfindungsgemäß wird diese Aufgabe durch ein Verfahren sowie eine Vorrichtung zum Überwachen eines Füllgrads von Reinigungsmittel in einer Kartusche für ein als wasserführendes Gerät dienendes Getränkezubereitungsgerät und ein Getränkezubereitungsgerät mit den Schritten bzw. Merkmalen der unabhängigen Ansprüche gelöst. Vorteilhafte Ausgestaltungen und Weiterbildungen der Erfindung ergeben sich aus den jeweils nachfolgenden abhängigen Ansprüchen.

Die mit der Erfindung erreichbaren Vorteile bestehen darin, dass ein Füllgrad einer mit einem Reinigungsmittel gefüllten Kartusche überwacht werden kann. Der hier vorgestellte Ansatz bietet den Vorteil, dass nicht einfach eine Anzahl an Reinigungsvorgängen bestimmt wird, nach denen die Kartusche ausgetauscht werden soll, sondern dass der tatsächliche Verbrauch des Reinigungsmittels ermittelt werden kann. Dies ist von Vorteil, um das in der Kartusche enthaltene Reinigungsmittel vollständig zu verbrauchen. Vorteilhafterweise kann die Kartusche dadurch länger verwendet werden, was kostensparend ist. Zudem kann durch das Überwachen des Füllgrads verhindert werden, dass das Reinigungsmittel in der Kartusche unbemerkt schon verbraucht ist, was vorteilhafterweise die Sicherheit in Bezug auf eine Reinigung des Getränkezubereitungsgeräts erhöht. Die Beschreibung bezieht sich beispielhaft auf ein Getränkezubereitungsgerät, sie gilt jedoch gleichermaßen für andere wasserführende Geräte, wie beispielsweise Dampfgarer, Dampfbügelsystem, Spülmaschine oder Waschmaschine.

Auch wenn der beschriebene Ansatz anhand eines Haushaltgerät beschrieben wird, können das hier beschriebene Verfahren und/oder die hier beschrieben Vorrichtung entsprechend im Zusammenhang mit einem gewerblichen oder professionellen Gerät, beispielsweise einem medizinischen Gerät, wie einem Reinigungs- oder Desinfektionsgerät, einem Kleinsterilisator, einem Großraumdesinfektor oder einer Container-Waschanlage eingesetzt werden.

Ein Verfahren zum Überwachen eines Füllgrads von Reinigungsmittel in einer Kartusche für ein Getränkezubereitungsgerät weist zumindest einen Schritt des Einlesens und einen Schritt des Ermittelns auf. Im Schritt des Einlesens wird ein Reinigungsmittelsignal eingelesen, das eine einem Reinigungsvorgang entsprechende Menge an aus der Kartusche zu förderndem Reinigungsmittel repräsentiert. Im Schritt des Ermittelns wird unter Verwendung des Reinigungsmittelsignals und eines Ursprungsfüllgrads von Reinigungsmittel in der Kartusche ein aktueller Füllgrad von Reinigungsmittel in der Kartusche ermittelt.

Bei dem Getränkezubereitungsgerät kann es sich beispielsweise um einen Kaffeevollautomaten, eine Kaffeemaschine, eine Espressomaschine oder einen Teebereiter oder um ein Gerät zum Erzeugen eines Milchschaumgetränks oder um ein ähnliches Gerät oder um eine Kombination aus diesen Geräten handeln. Die Kartusche kann ein Vorratsbehälter für ein Reinigungsmittel sein. Unter dem Reinigungsmittel kann beispielsweise eine Reinigungslösung zum Entfernen von Kaffeerückständen oder Kaffeeölen oder eine Entkalkungslösung verstanden werden. Das Reinigungsmittel kann flüssig oder fest sein, beispielsweise in Form eines wasserlöslichen Granulats. Der Füllgrad kann beispielsweise der Füllstand einer Reinigungslösung sein, oder der Anteil an Reinigungsmittel in der Kartusche, die zum Ausspülen des Reinigungsmittels beispielsweise mit Wasser befüllt wird. Bei dem Reinigungsmittelsignal kann es sich um ein elektrisches Signal oder um ein Funksignal handeln, das beispielsweise von einem Steuergerät oder einer Speichereinrichtung des Getränkezubereitungsgeräts bereitgestellt wird. Das Reinigungsmittelsignal kann beispielsweise eine Mengenangabe des während des Reinigungsvorgangs auszugebenden Reinigungsmittels umfassen. Im Schritt des Ermittelns kann beispielsweise die Menge an Reinigungsmittel des Reinigungsmittelsignals von einer Menge von Reinigungsmittel des Ursprungsfüllgrads subtrahiert werden. Der Ursprungsfüllgrad kann vor dem ersten Reinigungsvorgang, bei dem die Kartusche verwendet wird und nach jedem Wechseln der Kartusche beispielsweise voreingestellt sein, beispielsweise in Form einer in der Speichereinrichtung vorgespeicherten Information.

Gemäß einer Ausführungsform kann das Verfahren zudem einen Schritt des Speicherns aufweisen. Im Schritt des Speicherns kann der aktuelle Füllgrads als Ursprungsfüllgrad für einen nachfolgenden Reinigungsvorgang gespeichert werden. Auf diese Weise kann der aktuelle Füllgrad bei einem Durchführen des Verfahrens bei dem nachfolgenden Reinigungsvorgang einfach und zeitsparend ermittelt werden.

Zudem kann das Verfahren gemäß einer Ausführungsform einen Schritt des Bestimmens aufweisen. Im Schritt des Bestimmens kann das Reinigungsmittelsignals unter Verwendung eines Vorgangssignals bestimmt werden. Das Vorgangssignal kann den Reinigungsvorgang repräsentieren. Der Reinigungsvorgang kann insbesondere einem bestimmten Reinigungsvorgang von mehreren Reinigungsvorgängen entsprechen. Bei dem Reinigungsvorgang kann es sich beispielsweise um ein Reinigungsprogramm des Getränkezubereitungsgeräts handeln, das eine vorbestimmte Laufzeit und/oder eine vorbestimmte Dosierung des Reinigungsmittels umfasst. Vorteilhafterweise können beim Überwachen des Füllgrads auf diese Weise verschiedene Reinigungsvorgänge berücksichtigt werden.

Im Schritt des Bestimmens kann das Reinigungsmittelsignal gemäß einer Ausführungsform unter Verwendung eines Härtesignals bestimmt werden, das eine Wasserhärte (beispielsweise eines vom Reinigungsgerät verwendeten Leitungswassers) repräsentiert. Dazu kann die Wasserhärte beispielsweise von einem Benutzer mittels einer Eingabeeinrichtung eingegeben werden. Die eingegebene Wasserhärte kann beispielsweise gespeichert werden und bei dem Starten des Reinigungsvorgangs in Form des Härtesignals bereitgestellt werden.

Auch kann im Schritt des Einlesens gemäß einer Ausführungsform als Reinigungsmittelsignal ein Pumpensignal eingelesen werden, das eine Förderleistung und/oder eine Fördermenge einer Pumpe für den Reinigungsvorgang repräsentiert. Unter der Förderleistung kann beispielsweise eine von der Pumpe des Getränkezubereitungsgeräts ausgeförderte Menge an Reinigungsmittel oder eine Durchsatzrate an Reinigungsmittel verstanden werden, die beispielsweise in Form eines Ansteuersignals der Pumpe bereitgestellt werden kann. Bei dem Pumpensignal kann es sich um ein elektrisches Signal oder ein Funksignal handeln, dass beispielsweise von einer Pumpenspeichereinheit der Pumpe bereitgestellt werden kann. Vorteilhafterweise kann somit nicht nur die gemäß einer Programmvorgabe zu fördernde Menge an Reinigungsmittel erfasst werden, sondern auch die tatsächlich geförderte Menge, was ein genaueres Ermitteln des Füllgrad ermöglicht.

Außerdem kann im Schritt des Einlesens gemäß einer Ausführungsform als Reinigungsmittelsignal ein Sensorsignal eingelesen werden, das eine Durchflussmenge an Wasser mit gefördertem Reinigungsmittel des Reinigungsvorgangs repräsentiert. Das Sensorsignal kann beispielsweise von einem Durchflusssensor, einem Flowmeter, des Getränkezubereitungsgeräts bereitgestellt werden. Diese Ausführungsform ist besonders vorteilhaft, um die tatsächlich geförderte Menge an Reinigungsmittel exakt zu ermitteln.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrundeliegende Aufgabe schnell und effizient gelöst werden.

Die Vorrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Vorrichtung einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Vorrichtung kann ausgebildet sein, um die Ausgangssignale unter Verwendung einer in Hardware oder Software umgesetzten Verarbeitungsvorschrift zu bestimmen. Beispielsweise kann die Vorrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Es wird zudem ein Getränkezubereitungsgerät mit einer Kartusche für ein Reinigungsmittel und mit einer Ausführungsform der vorstehend genannten Vorrichtung vorgestellt. Auch durch diese Ausführungsform der Erfindung kann die der Erfindung zugrundeliegende Aufgabe zeitsparend und kostengünstig gelöst werden.

Gemäß einer Ausführungsform kann das Getränkezubereitungsgerät zusätzlich zu der Kartusche und einer Ausführungsform der vorstehend genannten Vorrichtung auch einen Wasserbehälter, eine Wasserleitung, einen Durchflusssensor, eine Pumpeneinheit mit einem Mikrocontroller und einem Pumpenspeicher, ein Heizelement und eine Brüheinheit mit einer Kaffeemühle umfassen.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Vorrichtung ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Ein Ausführungsbeispiel der Erfindung ist in den Zeichnungen rein schematisch dargestellt und wird nachfolgend näher beschrieben. Es zeigt
- Figur 1: eine schematische Perspektiv-Darstellung eines Getränkezubereitungsgeräts mit einer Vorrichtung zum Überwachen eines Füllgrads von Reinigungsmittel in einer Kartusche für das Getränkezubereitungsgerät gemäß einem Ausführungsbeispiel;
- Figur 2: eine schematische Darstellung einer Vorrichtung zum Überwachen eines Füllgrads von Reinigungsmittel in einer Kartusche für ein Getränkezubereitungsgerät gemäß einem Ausführungsbeispiel;
- Figur 3: ein Ablaufdiagramm eines Verfahrens zum Überwachen eines Füllgrads von Reinigungsmittel in einer Kartusche für ein Getränkezubereitungsgerät gemäß einem Ausführungsbeispiel; und
- Figur 4: eine schematische Darstellung eines Teils eines Getränkezubereitungsgeräts mit einer Vorrichtung zum Überwachen eines Füllgrads von Reinigungsmittel in einer Kartusche für das Getränkezubereitungsgerät gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

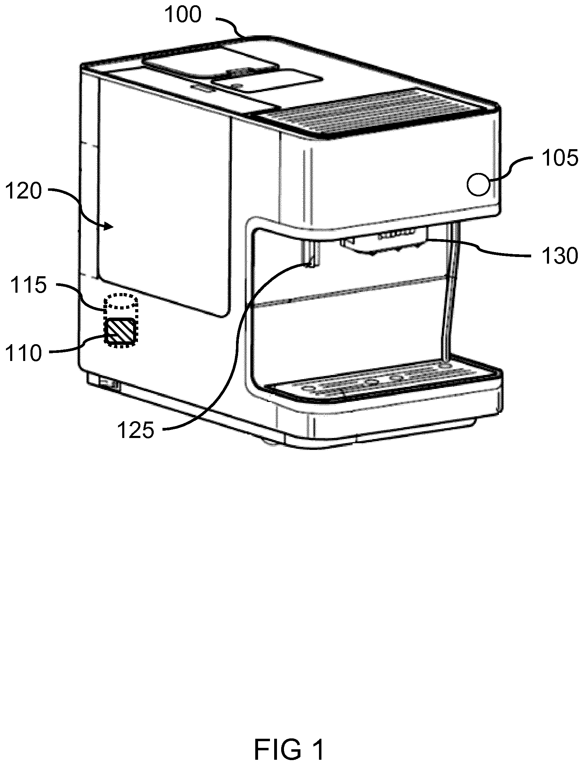

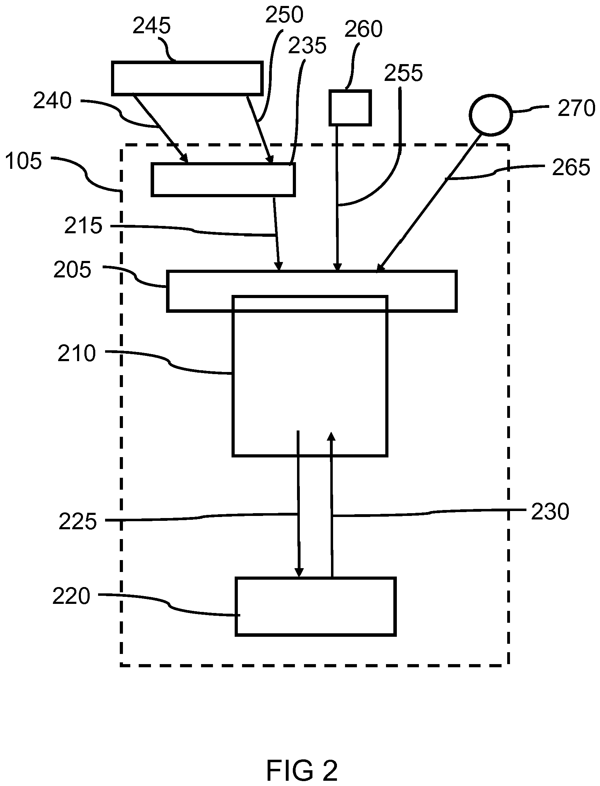

Figur 1 zeigt eine schematische perspektiv-Darstellung eines Getränkezubereitungsgeräts 100 mit einer Vorrichtung 105 zum Überwachen eines Füllgrads von Reinigungsmittel 110 in einer Kartusche 115 für das Getränkezubereitungsgerät 100 gemäß einem Ausführungsbeispiel. Es ist eine perspektivische Ansicht auf das Getränkezubereitungsgerät 100 gezeigt, das beispielhaft als Kaffeeautomat ausgeführt ist. Das Getränkezubereitungsgerät 100 umfasst die Vorrichtung 105 und die Kartusche 115, die beispielhaft unterhalb eines Wasserbehälters 120 des Getränkezubereitungsgeräts 100 angeordnet ist. Das Überwachen des Füllgrads von Reinigungsmittel 110 in der Kartusche 115 mittels der Vorrichtung 105 wird ist anhand der nachfolgenden Figur 2 beschrieben. In der hier gezeigten Kartusche 115 ist beispielhaft ein Reinigungsmittel 110 enthalten, beispielsweise ein Reinigungsmittel zum Entfernen von Kaffeerückständen oder Kaffeeölen in Komponenten des Getränkezubereitungsgeräts 100, oder eine Entkalkungslösung zum automatischen Entkalken des Getränkezubereitungsgeräts 100. Die Vorrichtung 105 ist beispielhaft in einem Frontbereich des Getränkezubereitungsgeräts 100 angeordnet. Der Frontbereich ist als Überbau eines Getränkeentnahmebereichs mit einer Heißwasserausgabe 125 und einer Brüheinheit-Ausgabe 130 ausgeführt. In dem Frontbereich des Getränkezubereitungsgeräts 100 kann eine in der Figur 1 aus Gründen der Übersichtlichkeit nicht dargestellte Anzeigeeinrichtung angeordnet sein. Der aktuelle Füllgrad an Reinigungsmittel 110 in der Kartusche 115 kann einem Benutzer beispielsweise unter Verwendung der Anzeigeeinrichtung angezeigt werden. Die Kartusche 115 kann zum Auswechseln oder Befüllen aus dem Getränkezubereitungsgerät 100 herausnehmbar sein.

Im Folgenden wird beispielhaft eine Verwendung eines Ausführungsbeispiels der Vorrichtung 105 in Verbindung mit dem Getränkezubereitungsgerät 100 als Kaffeeautomat beschrieben: Das Getränkezubereitungsgerät 100 umfasst zum automatischen Reinigen die Kartusche 115 mit einem konzentriertem Reinigungsmittel 110. Das Reinigungsmittel 110 liegt beispielsweise als Konzentrat zur Entfernung von Kaffeeresten und/oder Kaffeeölen in der Kartusche 115 vor und ist zur Mischung mit Leitungswasser zur Bildung einer Reinigungslösung vorgesehen. Bei jedem Reinigungsvorgang wird der Kartusche 115 eine definierte Menge an Reinigungsmittel 110 entnommen. Vorteilhafterweise werden dabei nicht die Reinigungszyklen unabhängig vom tatsächlichen Verbrauch an Reinigungsmittel 110 und unabhängig von unterschiedlichen Reinigungsarten bzw. Reinigungsprogrammabläufen gezählt. Mittels der Vorrichtung 105 ist es möglich, den Füllgrad des Reinigungsmittels 110 in der Kartusche 115 zu überwachen, wobei verschiedenen Füllgrade der Kartusche 115, Änderungen an der Kartusche 115, wie beispielsweise ein verändertes Dosierverhalten oder verschiedene Reinigungsprozesse zu berücksichtigt werden können, was vorteilhafterweise ein vollständiges Verbrauchen des Reinigungsmittels 110 in der Kartusche 115 ermöglicht, da gemäß einem Ausführungsbeispiel der tatsächliche Verbrauch an Reinigungsmittel 110 ermittelt wird.

Figur 2 zeigt eine schematische Darstellung einer Vorrichtung 105 zum Überwachen eines Füllgrads von Reinigungsmittel in einer Kartusche für ein Getränkezubereitungsgerät gemäß einem Ausführungsbeispiel. Die Vorrichtung 105 umfasst eine Einleseeinrichtung 205 und eine Ermittlungseinrichtung 210. Die Einleseeinrichtung 205 ist ausgebildet, ein Reinigungsmittelsignal 215 einzulesen. Das Reinigungsmittelsignal 215 repräsentiert eine einem Reinigungsvorgang entsprechende Menge an aus der Kartusche zu förderndem Reinigungsmittel. Die Ermittlungseinrichtung 210 ist ausgebildet, unter Verwendung des Reinigungsmittelsignals 215 und eines Ursprungsfüllgrads einen aktuellen Füllgrad von Reinigungsmittel in der Kartusche zu ermitteln.

Gemäß dem hier gezeigten Ausführungsbeispiel umfasst die Vorrichtung 105 zudem eine Speichereinrichtung 220. Die Ermittlungseinrichtung 210 ist ausgebildet, ein Füllgradsignal 225 bereitzustellen, das den aktuellen Füllgrad von Reinigungsmittel in der Kartusche repräsentiert. Die Speichereinrichtung 220 ist ausgebildet, unter Verwendung des Füllgradsignals 225 den aktuellen Füllgrad als Ursprungsfüllgrad für einen nachfolgenden Reinigungsvorgang zu speichern, und bei einem Starten des nachfolgenden Reinigungsvorgangs ein Ursprungsfüllgradsignal 230, das den gespeicherten Ursprungsfüllgrad repräsentiert, an die Ermittlungseinrichtung 210 auszugeben.

Zudem umfasst die Vorrichtung 105 gemäß dem hier gezeigten Ausführungsbeispiel eine Bestimmungseinrichtung 235. Die Bestimmungseinrichtung 235 ist ausgebildet, das Reinigungsmittelsignal 215 unter Verwendung eines Vorgangssignals 240 zu bestimmen. Das Vorgangssignal 240 repräsentiert den Reinigungsvorgang, insbesondere wobei der Reinigungsvorgang ein definierter Reinigungsvorgang aus einer Auswahl aus mehrerer Reinigungsvorgänge ist. Das Vorgangssignal 240 wird hier beispielhaft von einer Eingabeeinrichtung 245 des Getränkezubereitungsgeräts bereitgestellt.

Die Bestimmungseinrichtung 235 ist gemäß dem hier gezeigten Ausführungsbeispiel zudem ausgebildet, das Reinigungsmittelsignal 215 unter Verwendung eines Härtesignals 250 zu bestimmen. Das Härtesignal 250 repräsentiert eine Wasserhärte von Leitungswasser. Auch das Härtesignal 250 wird hier beispielhaft von der Eingabeeinrichtung 245 bereitgestellt.

Die Einleseeinrichtung 205 ist gemäß dem hier gezeigten Ausführungsbeispiel dazu ausgebildet, als Reinigungsmittelsignal ein Pumpensignal 255 einzulesen. Das Pumpensignal 255 repräsentiert eine Förderleistung einer Pumpe für den Reinigungsvorgang. Das Pumpensignal 255 wird hier beispielhaft von einer Pumpeneinheit 260 bereitgestellt.

Auch ist die Einleseeinrichtung 205 gemäß dem hier gezeigten Ausführungsbeispiel dazu ausgebildet, als Reinigungsmittelsignal ein Sensorsignal 265 einzulesen. Das Sensorsignal 265 repräsentiert eine Durchflussmenge an Wasser mit gefördertem Reinigungsmittel des Reinigungsvorgangs. Das Sensorsignal 265 wird von einem Durchflusssensor 270 bereitgestellt.

Mittels einem Ausführungsbeispiel der hier gezeigten Vorrichtung 105 ist es möglich, den Füllgrad der Kartusche unter Verwendung eines Verbrauchs oder prognostizierten Verbrauchs von Reinigungsmittel und des Ursprungsfüllgrads zu ermitteln. Dazu wird beispielsweise bei jedem Reinigungsvorgang, wie einem automatischen Entkalkungsvorgang, der entsprechende Mengenwert des Reinigungsmittels vom vorherigen Füllstand oder Füllgrad abgezogen. Vorteilhafterweise kann die Vorrichtung kostengünstig realisiert werden.

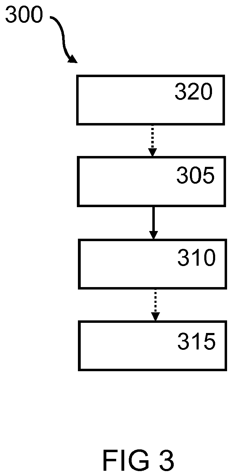

Figur 3 zeigt ein Ablaufdiagramm eines Verfahrens 300 zum Überwachen eines Füllgrads von Reinigungsmittel in einer Kartusche für ein Getränkezubereitungsgerät gemäß einem Ausführungsbeispiel. Das Verfahren umfasst zumindest einen Schritt 305 des Einlesens und einen Schritt 310 des Ermittelns. Im Schritt 305 des Einlesens wird ein Reinigungsmittelsignal eingelesen, das eine einem Reinigungsvorgang entsprechende Menge an aus der Kartusche zu förderndem Reinigungsmittel repräsentiert. Im Schritt 310 des Ermittelns wird unter Verwendung des Reinigungsmittelsignals und eines Ursprungsfüllgrads von Reinigungsmittel in der Kartusche ein aktueller Füllgrad von Reinigungsmittel in der Kartusche ermittelt.

Gemäß einem Ausführungsbeispiel umfasst das Verfahren 300 zudem einen Schritt 315 des Speicherns. Im Schritt 315 des Speicherns wird der aktuelle Füllgrad als Ursprungsfüllgrad für einen nachfolgenden Reinigungsvorgang gespeichert. Der Schritt 315 des Speicherns wird optional nach dem Schritt 310 des Ermittelns ausgeführt.

Zudem umfasst das Verfahren 300 gemäß einem Ausführungsbeispiel einen Schritt 320 des Bestimmens. Im Schritt 320 des Bestimmens wird das Reinigungsmittelsignal unter Verwendung eines Vorgangssignals bestimmt. Das Vorgangssignal repräsentiert den Reinigungsvorgang, insbesondere wobei der Reinigungsvorgang eine Auswahl aus mehreren Reinigungsvorgängen ist. Der Schritt 320 des Bestimmens wird optional vor dem Schritt 305 des Einlesens ausgeführt.

Im Schritt 320 des Bestimmens wird das Reinigungsmittelsignal gemäß einem Ausführungsbeispiel zudem unter Verwendung eines bestimmt. Das Härtesignal repräsentiert eine Wasserhärte von Leitungswasser.

Ferner wird im Schritt 305 des Einlesens als Reinigungsmittelsignal zudem ein Pumpensignal eingelesen. Das Pumpensignal repräsentiert eine Förderleistung einer Pumpe für den Reinigungsvorgang.

Gemäß einem Ausführungsbeispiel wird im Schritt 305 des Einlesens als Reinigungsmittelsignal ferner ein Sensorsignal eingelesen. Das Sensorsignal repräsentiert eine Durchflussmenge an Wasser mit gefördertem Reinigungsmittel des Reinigungsvorgangs.

Das Verfahren 300 ist unter Verwendung eines Ausführungsbeispiels der vorstehend genannten Vorrichtung ausführbar und/oder ansteuerbar.

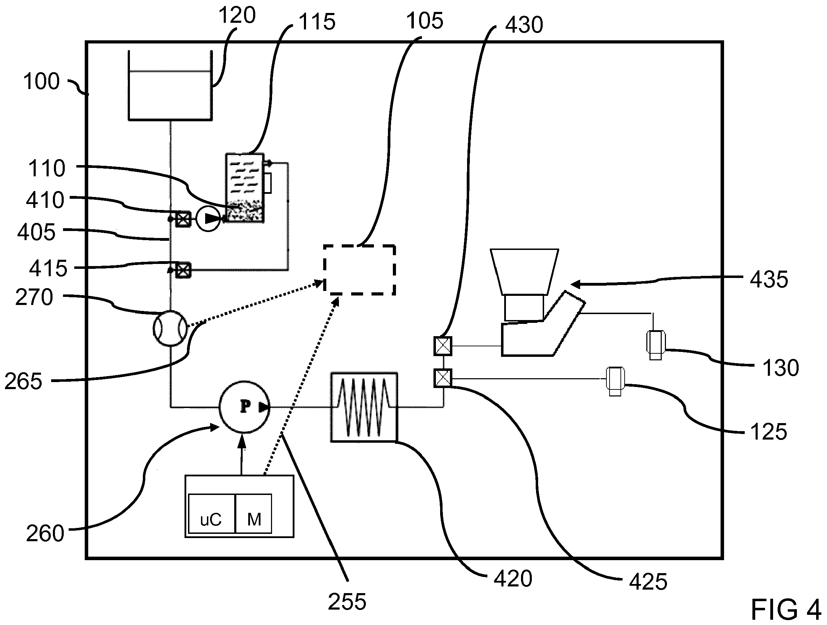

Figur 4 zeigt eine schematische Darstellung eines Teils eines Getränkezubereitungsgeräts 100 mit einer Vorrichtung 105 zum Überwachen eines Füllgrads von Reinigungsmittel 110 in einer Kartusche 115 für das Getränkezubereitungsgerät 100 gemäß einem Ausführungsbeispiel. Die Vorrichtung 105 ähnelt oder entspricht der Vorrichtung aus den vorstehend genannten Figuren 1 und 2. Das Getränkezubereitungsgerät 100 umfasst gemäß dem hier gezeigten Ausführungsbeispiel den Wasserbehälter 120, der beispielhaft frisches Wasser enthält. Die Kartusche 115 mit dem Reinigungsmittel 110, beispielsweise einem Reinigungskonzentrat, ist über eine Wasserleitung 405 fluidisch mit dem Wasserbehälter 120 verbunden. Die Wasserleitung 405 weist ein Eingangsventil 410 zum Einleiten von Wasser in die Kartusche 115 und ein Ausgangsventil 415 zum Ausleiten von mit Wasser vermischtem Reinigungsmittel aus der Kartusche 115 auf. In Fließrichtung nach dem Ausgangsventil ist der Durchflusssensor 270 angeordnet, der ausgebildet ist das Sensorsignal 265 an die Vorrichtung bereitstellt. Die Pumpeneinheit 260 umfasst eine Pumpe P, einen Mikrocontroller uC und einen Pumpenspeicher M. Die Pumpeneinheit 260 ist ausgebildet, das Pumpensignal 255 an die Vorrichtung 105 bereitzustellen. Das Getränkezubereitungsgerät 100 umfasst zudem ein Heizelement 420, das ausgebildet ist, eine von der Wasserleitung 405 zugeleitete Flüssigkeit, beispielsweise Wasser oder aus der Kartusche 115 ausgeleitete Reinigungsmittel 110, oder eine Mischung aus Wasser und dem Reinigungsmittel 110 zu erhitzen. Das erhitze Wasser wird über die Wasserleitung 405 zu einem Heißwasserventil 425 geleitet. Das Heißwasserventil 425 weist eine Öffnung zur Heißwasserausgabe 125 auf. Zudem weist das Heißwasserventil 425 eine Durchlassöffnung zu einem Brüheinheit-Ventil 430 auf. Das Brüheinheit-Ventil 430 weist eine Öffnung zu einer Brüheinheit 435 mit einer Kaffeemühle auf und der Brüheinheit-Ausgabe 130 auf.

Gemäß dem hier gezeigten Ausführungsbeispiel kann mittels der Vorrichtung 105 unter Verwendung des Pumpensignals 255 und des Sensorsignals 265 eine geförderte Menge an mit Wasser vermischten Reinigungsmittel 100, beispielsweise Entkalkungslösung, erfasst werden, über einen Funktionsparameter der Pumpe P wie eine Laufzeit oder eine Ansteuerung der Pumpe P. Zudem kann unter Verwendung der Vorrichtung 105 beispielsweise der Verbrauch an wirksamer Entkalkungslösung, durch eine Pufferwirkung des Leitungswassers über die eingestellte Wasserhärte berechnet werden. Zum Ermitteln des aktuellen Füllgrads wird die geförderte Menge an Reinigungsmittel 110 von der Menge, die in der neuen Kartusche vorhanden war, abgezogen.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (300) zum Überwachen eines Füllgrads von Reinigungsmittel (110) in einer Kartusche (115) für ein wasserführendes Gerät, wie Getränkezubereitungsgerät (100), wobei das Verfahren (300) folgende Schritte aufweist:
Einlesen (305) eines Reinigungsmittelsignals (215), das eine einem Reinigungsvorgang entsprechende Menge an aus der Kartusche (115) zu förderndem Reinigungsmittel (110) repräsentiert; und
Ermitteln (310) eines aktuellen Füllgrads von Reinigungsmittel (110) in der Kartusche (115) unter Verwendung des Reinigungsmittelsignals (215) und eines Ursprungsfüllgrads von Reinigungsmittel (110) in der Kartusche (115).

2. Verfahren (300) gemäß Anspruch 1, mit einem Schritt (315) des Speicherns des aktuellen Füllgrads als Ursprungsfüllgrad für einen nachfolgenden Reinigungsvorgang.

3. Verfahren (300) gemäß einem der vorangegangenen Ansprüche, mit einem Schritt (320) des Bestimmens des Reinigungsmittelsignals (215) unter Verwendung eines Vorgangssignals (240), das den Reinigungsvorgang repräsentiert, insbesondere wobei der Reinigungsvorgang einen bestimmten Reinigungsvorgang von mehreren möglichen Reinigungsvorgängen entspricht.

4. Verfahren (300) gemäß Anspruch 3, wobei im Schritt (320) des Bestimmens das Reinigungsmittelsignal (215) unter Verwendung eines Härtesignals (250) bestimmt wird, das eine Wasserhärte repräsentiert.

5. Verfahren (300) gemäß einem der vorangegangenen Ansprüche, bei dem im Schritt (305) des Einlesens als Reinigungsmittelsignal (215) ein Pumpensignal (255) eingelesen wird, das eine Förderleistung und/oder eine Fördermenge einer Pumpe (P) für den Reinigungsvorgang repräsentiert.

6. Verfahren (300) gemäß einem der vorangegangenen Ansprüche, bei dem im Schritt (305) des Einlesens als Reinigungsmittelsignal (215) ein Sensorsignal (265) eingelesen wird, das eine Durchflussmenge an Wasser mit gefördertem Reinigungsmittel (110) des Reinigungsvorgangs repräsentiert.

7. Vorrichtung (105), die ausgebildet ist, um die Schritte des Verfahrens (300) gemäß einem der vorangegangenen Ansprüche in entsprechenden Einheiten (205, 210) auszuführen und/oder anzusteuern.

8. Wassserführendes Gerät, bevorzugt Getränkezubereitungsgerät (100) mit einer Kartusche (115) für ein Reinigungsmittel (110) und mit einer Vorrichtung (105) gemäß Anspruch 7.

9. Wassserführendes Gerät, bevorzugt Getränkezubereitungsgerät (100) gemäß Anspruch 8 mit einem Wasserbehälter (120), einer Wasserleitung (405), einem Durchflusssensor (270), einer Pumpeneinheit (260) mit einem Mikrocontroller (uC) und einem Pumpenspeicher (M), einem Heizelement (420) und einer Brüheinheit (435) mit einer Kaffeemühle.

10. Computer-Programmprodukt mit Programmcode zur Durchführung des Verfahrens (300) nach einem der vorangegangenen Ansprüche 1 bis 6, wenn das Computer-Programmprodukt auf einer Vorrichtung (105) gemäß Anspruch 7 ausgeführt wird.
